# FASCICULE DE BREVET EUROPEEN

(11) **EP 0 889 846 B1**
(45) Date de publication et mention de la délivrance du brevet: **27.10.1999**
(21) Numéro de dépôt: 97916497.7
(22) Date de dépôt: 25.03.1997
(51) Int. Cl.: B67D 3/04, F16K 21/04, F16K 21/14

(54) **ROBINET DE DISTRIBUTION DE LIQUIDES**
ZAPFHAHN FÜR FLÜSSIGKEITEN
LIQUID DISTRIBUTION VALVE

(30) Priorité: 27.03.1996 FR 9604029
(43) Date de publication de la demande: 13.01.1999
(73) Titulaire: VITOP (Entreprise Unipersonnelle à Responsabilité Limitée), 57370 Schalbach (FR)
(72) Inventeur: ERB, René, F-57370 Phalsbourg (FR)
(74) Mandataire: Nuss, Pierre
(86) Numéro de dépôt international: FR9700529
(87) Numéro de publication internationale: WO9735802

(56) Documents cités:
- EP-A- 0 432 070
- WO-A-94/29214
- DE-C- 34 924
- GB-A- 2 188 399

## Description

La présente invention concerne le domaine de la distribution de liquides contenus dans des petits récipients rigides, semi-rigides ou souples, en particulier de liquides alimentaires, ces récipients étant munis, à cet effet, de robinets de distribution, et a pour objet un tel robinet à fermeture automatique et muni d'un moyen de maintien en position d'ouverture.

Actuellement, la distribution de boissons alimentaires, notamment de vins de table, de jus de fruits ou de lait stérilisé ultra haute température à partir de petits récipients rigides, semi-rigides ou souples, tels que des outres en matière synthétique, s'effectue généralement au moyen de robinets fixés sur la bonde de vidange de ces récipients.

A cet effet, on connaît plus particulièrement, par EP-A-0 432 070, un robinet constitué par un corps de montage dans la bonde d'un récipient et par un piston de libération du liquide chargé par un ressort et guidé dans le corps, le piston agissant sur une membrane d'étanchéité élastique solidaire du corps. Le corps de montage dans la bonde est pourvu d'un emmanchement de fixation comportant une gorge coopérant par encliquetage avec une saillie annulaire de la bonde, interdisant ainsi tout démontage du robinet.

Pour sa manoeuvre, le piston est muni, à sa partie supérieure, d'appendices, s'étendant à l'extérieur du robinet à travers des ouvertures de ce dernier et destinés à permettre d'effectuer une traction sur le piston, afin de libérer l'ouverture de distribution, la fermeture s'effectuant automatiquement.

L'inviolabilité de ce robinet permet d'éviter toute fraude, en empêchant un nouveau remplissage, du fait de l'impossibilité de démontage du robinet de la bonde du récipient.

De tels robinets permettent une distribution correcte du liquide et sont parfaitement adaptés, soit à une opération d'embouteillage, soit à une succession de soutirages, que ces derniers soient effectués dans un environnement stérile, tel qu'une chambre stérile sur remplisseuse aseptique, ou non, par exemple pour le remplissage de vertes ou de petits récipients, c'est-à-dire pour un usage privé ou en restauration pour de petits débits d'une seule boisson ou d'un seul cru.

Cependant, dans le cas de débits importants en restauration ou de distribution de différents crus au verte, plusieurs récipients sont mis en oeuvre simultanément et leur encombrement nécessite leur installation dans un espace indépendant et leur liaison par des moyens adaptés à un distributeur de comptoir à robinets multiples.

A cet effet, il est prévu de disposer un dispositif de connexion entre le distributeur et le robinet équipant le récipient, ce dispositif permettant un branchement étanche et rapide de la sortie du robinet du récipient à une conduite d'amenée et un maintien de ce robinet en position de distribution pendant toute la durée du branchement.

Toutefois, ces dispositifs de connexion connus sont encombrants et onéreux. Aussi, il est particulièrement intéressant, dans un tel cas, de pouvoir effectuer le branchement de la conduite d'amenée et l'ouverture du robinet avec un minimum de mouvements simples.

En outre, pour des raisons économiques, dans le cas de la distribution de liquides alimentaires alcoolisés, le robinet équipant le récipient doit être fiscalisable, c'est-à-dire qu'il doit pouvoir être muni d'un timbre fiscal ou analogue, devant être détruit à la première utilisation, ce afin d'éviter toute fraude.

La présente invention a pour but de pallier les inconvénients des dispositifs de connexion et des robinets existants et de proposer un robinet à fermeture automatique, pouvant être maintenu en position d'ouverture, afin de permettre un raccordement simple et rapide à un robinet de distributeur de comptoir.

Conformément à l'invention, le robinet de distribution de liquides, en particulier de liquides alimentaires aseptiques ou non, à fermeture automatique, qui est essentiellement constitué par un corps de montage dans la bonde d'un récipient et par un piston de libération du liquide agissant sur une membrane d'étanchéité élastique solidaire du corps, ce robinet étant pourvu d'un moyen de maintien en position d'ouverture du piston consistant en des éléments de forme coopérante prévus, respectivement, sur le corps du robinet et sur le piston, est caractérisé en ce que les éléments formant le moyen sont constitués, respectivement, par des cames s'étendant sur la partie du corps du robinet formant le siège de la membrane d'étanchéité élastique et le guidage du piston et par des patins disposés à intervalles réguliers sur une partie du piston s'étendant concentriquement au-dessus desdites cames du corps.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective du robinet conforme à l'invention ;
la figure 2 est une vue analogue à celle de la figure 1 représentant le corps du robinet seul ;
la figure 3 est une vue en élévation latérale et en coupe du robinet en position fermé ;
la figure 4 est une vue analogue à celle de la figure 3, le robinet étant en position ouverte, et
la figure 5 est une vue analogue à celle de la figure 4 d'une variante de réalisation de l'invention.

Les figures des dessins annexés représentent un robinet de distribution de liquides, en particulier de liquides alimentaires, à fermeture automatique, qui est essentiellement constitué par un corps 1 de montage dans la bonde d'un récipient et par un piston 2 de libération du liquide agissant sur une membrane d'étanchéité élastique 3 solidaire du corps 1.

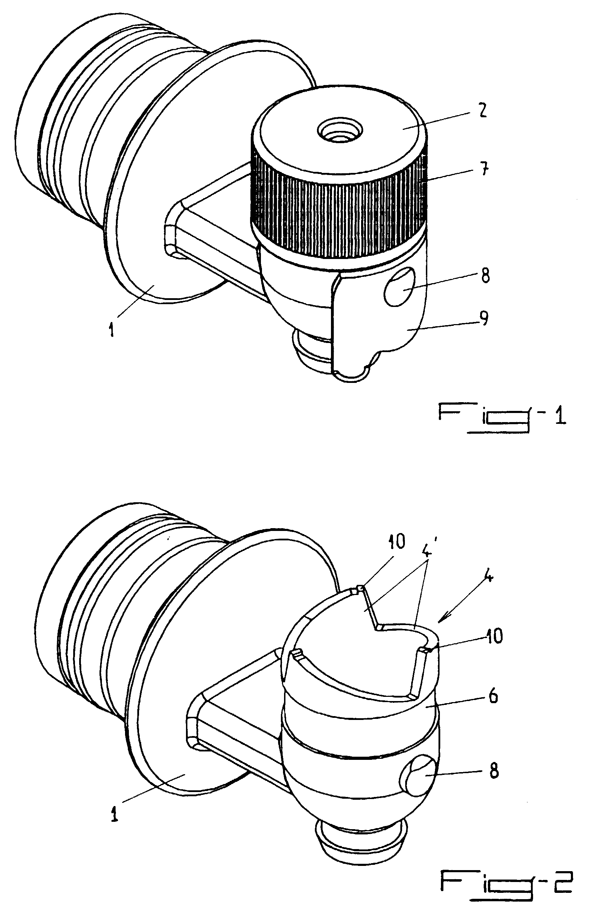

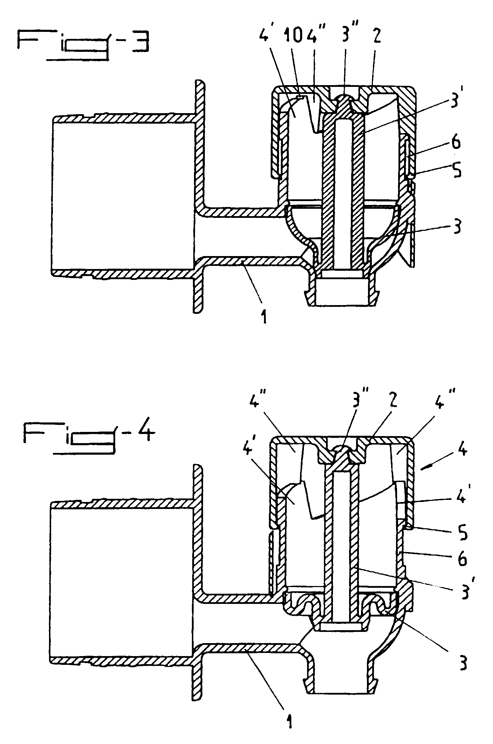

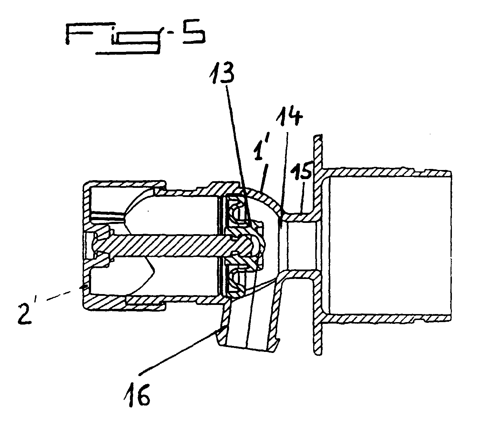

Comme le montrent les figures 2 à 4 des dessins annexés, ce robinet est pourvu d'un moyen 4 de maintien en position d'ouverture du piston 2. Ce moyen 4 consiste essentiellement en des éléments 4' et 4'' de forme coopérante prévus, respectivement, sur le corps 1 du robinet et sur le piston 2.

Selon une caractéristique de l'invention, les éléments 4' et 4'' formant le moyen 4 sont constitués, respectivement, par des cames s'étendant sur la partie du corps 1 du robinet formant le siège de la membrane d'étanchéité élastique 3 et le guidage du piston 2 et par des patins disposés à intervalles réguliers sur une partie du piston 2 s'étendant concentriquement au-dessus desdites cames du corps 1 (figures 2 à 4).

Le piston 2 est avantageusement constitué sous forme d'un bouton de manoeuvre creux emmanché sur la partie du corps 1 du robinet formant le siège de la membrane d'étanchéité élastique 3 et le guidage dudit piston 2 et est relié, avec possibilité de rotation libre, à la membrane d'étanchéité élastique 3 solidaire du corps 1. Le piston 2 est muni, en outre, d'un moyen 5 de maintien par encliquetage sur la partie correspondante du corps 1, par coopération avec une gorge périphérique 6 s'étendant sous les cames formant les éléments 4' du moyen 4, ce moyen 5 étant sous forme d'un épaulement d'extrémité intérieur. Ainsi, après encliquetage du piston 2 sur la partie correspondante du corps 1, ledit piston 2 est maintenu sur ledit corps 1 de manière indémontable.

Les patins formant les éléments 4'' prévus sur le piston 2 sont disposés sur la paroi cylindrique interne du bouton formant le piston 2, du côté opposé à l'épaulement formant le moyen 5 de maintien par encliquetage leur extrémité inférieure étant à une distance dudit épaulement légèrement supérieure à la hauteur des cames 4' à partir de la gorge périphérique 6. Ainsi, les patins 4'' sont guidés concentriquement sur les cames 4' et, lors de la rotation du bouton formant le piston 2, ils sont poussés sur la pente de ces derniers et déforment la membrane d'étanchéité élastique 3 dans le sens d'une ouverture du robinet (figure 4).

Les cames 4' sont, de préférence, à pentes asymétriques et présentent une partie supérieure plane d'appui de l'extrémité inférieure des patins 4'', qui ont une forme de pointe triangulaire à bout arrondi. Il en résulte que l'ouverture du robinet peut être réalisée aisément par glissement des patins 4'' sur la pente de plus faible inclinaison des cames 4', le maintien en position ouverte s'effectuant par appui des patins 4'' sur la partie supérieure desdites cames 4'. Pour la fermeture automatique, il suffit de réaliser une légère rotation supplémentaire du bouton formant le piston 2, les patins 4'' glissant alors par leur extrémité sur la pente plus forte des cames 4' sous l'effet de la traction exercée par la membrane d'étanchéité élastique 3. Une rotation incomplète du bouton, tendant à pousser les patins 4'' sur les pentes plus forte des cames 4', et un relâchement successif auront pour effet de réaliser automatiquement une fermeture lors du relâchement dudit bouton.

Conformément à une autre caractéristique de l'invention, les cames 4' sont avantageusement pourvues, à l'extrémité de la partie supérieure plane, du côté de la plus forte pente, d'un dispositif 10 d'arrêt en position des patins 4'', sous forme d'une saillie d'extrémité. Un tel dispositif 10 d'arrêt en position des patins 4'' permet à l'opérateur de contrôler facilement la position d'ouverture irréversible du bouton 2, par simple constatation de l'arrivée en butée desdits patins 4'' se traduisant par un point dur lors de la rotation.

Conformément à une autre caractéristique de l'invention, la membrane d'étanchéité élastique 3 est pourvue d'un fût 3', d'une seule pièce avec ladite membrane 3 et pourvu à son extrémité libre d'un palier 3'' de liaison avec possibilité de rotation au bouton formant le piston 2. Une telle liaison permet un déplacement vertical de la membrane 3 et sa déformation par écrasement pendant la rotation du bouton 2 sans pour autant que ladite membrane 3 soit soumise à une déformation par cisaillement, qui serait néfaste.

Le bouton formant le piston 2 est avantageusement pourvu, de manière connue, à la périphérie de sa partie supérieure d'un moletage 7 favorisant sa préhension et sa manoeuvre.

Selon une autre caractéristique de l'invention, et comme le montrent plus particulièrement les figures 1 et 2 des dessins annexés, le corps 1 du robinet est pourvu, sous la gorge périphérique 6, d'un ergot 8 destiné à coopérer avec un trou de section correspondante d'une cape arrachable 9 reliée au bouton 2 par des picots non représentés et présentant une surface de collage d'un timbre de fiscalisation. Ainsi, une rotation du bouton 2 est empêchée jusqu'à l'arrachement de la cape 9, du fait de la coopération du trou prévu dans cette dernière avec l'ergot 8 du corps 1, l'arrachement de la cape 9 ayant pour effet de déchirer le timbre de fiscalisation, au moins au niveau de son contact avec l'ergot 8, de sorte qu'il est rendu inutilisable. Il résulte de ce mode de réalisation que le robinet est inviolable pendant le transport et le stockage. Ainsi, la sécurité indispensable pour le conditionnement de liquides alimentaires aseptiques, tels que les jus de fruits ou le lait stérilisé ultra haute température, est assurée. Cette inviolabilité permet de détecter instantanément une utilisation délictueuse.

De manière connue, l'extrémité de sortie du corps 1 du robinet est munie d'un moyen de maintien périphérique en saillie d'une extrémité de conduite flexible, de type connu en soi, permettant un raccordement rapide d'une telle conduite.

Dans les figures 1 à 4 des dessins annexés, le robinet est représenté avec son piston 2 s'étendant perpendiculairement à l'axe du corps de montage dans la bonde d'un récipient, cependant, il est également possible de prévoir que le corps du robinet s'étendent de manière inclinée par rapport à la perpendiculaire à cet axe ou encore parallèlement ou coaxialement à ce dernier.

Ainsi, la figure 5 des dessins annexés représente une variante de réalisation de l'invention, dans laquelle le corps 1' du robinet s'étend en prolongement du corps de montage dans la bonde d'un récipient et coaxialement à ce dernier, son piston 2' s'étendant également coaxialement au corps de montage, la membrane d'étanchéité correspondante 13 s'appuyant directement sur une portée 14 prévue sur un canal 15 de liaison entre ledit corps de montage dans la bonde et le corps 1' du robinet, en aval de l'orifice d'écoulement 16 de ce dernier. Un tel mode de réalisation est particulièrement avantageux dans le cas de robinets destinés à la distribution de liquides aseptiques.

En effet, dans ce cas, l'étanchéité de la membrane élastique 13 est s'effectue uniquement au niveau de la portée 14, soit en un seul point, contrairement au mode de réalisation représenté aux figures 1 à 4 des dessins annexés, dans lequel l'étanchéité doit également être garantie au niveau de la jonction de la membrane avec le corps du robinet. En conséquence, les risques de non aseptie sont considérablement diminués.

Grâce à l'invention, il est possible de réaliser un robinet à fermeture automatique permettant un maintien en position d'ouverture, ainsi qu'une fermeture rapide ou encore une ouverture par impulsion avec fermeture rapide.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Robinet de distribution de liquides, en particulier de liquides alimentaires, à fermeture automatique, essentiellement constitué par un corps (1) de montage dans la bonde d'un récipient et par un piston (2) de libération du liquide agissant sur une membrane d'étanchéité élastique (3) solidaire du corps (1), ce robinet étant pourvu d'un moyen (4) de maintien en position d'ouverture du piston (2) consistant en des éléments (4' et 4'') de forme coopérante prévus, respectivement, sur le corps (1) du robinet et sur le piston (2), caractérisé en ce que les éléments (4' et 4'') formant le moyen (4) sont constitués, respectivement, par des cames s'étendant sur la partie du corps (1) du robinet formant le siège de là membrane d'étanchéité élastique (3) et le guidage du piston (2) et par des patins disposés à intervalles réguliers sur une partie du piston (2) s'étendant concentriquement au-dessus desdites cames du corps (1).

2. Robinet, suivant la revendication 1, caractérisé en ce que le piston (2) est constitué sous forme d'un bouton de manoeuvre creux emmanché sur la partie du corps (1) du robinet formant le siège de la membrane d'étanchéité élastique (3) et le guidage dudit piston (2) et est relié, avec possibilité de rotation libre, à la membrane d'étanchéité élastique (3) solidaire du corps (1).

3. Robinet, suivant l'une quelconque des revendications 1 et 2, caractérisé en ce que le piston (2) est muni, en outre, d'un moyen (5) de maintien par encliquetage sur la partie correspondante du corps (1), par coopération avec une gorge périphérique (6) s'étendant sous les cames formant les éléments (4') du moyen (4), ce moyen (5) étant sous forme d'un épaulement d'extrémité intérieur.

4. Robinet, suivant l'une quelconque des revendications 1 et 2, caractérisé en ce que les patins formant les éléments (4'') prévus sur le piston (2) sont disposés sur la paroi cylindrique interne du bouton formant le piston (2), du côté opposé à l'épaulement formant le moyen (5) de maintien par encliquetage, leur extrémité inférieure étant à une distance dudit épaulement légèrement supérieure à la hauteur des cames (4') à partir de la gorge périphérique (6).

5. Robinet, suivant l'une quelconque des revendications 1, 2 et 4, caractérisé en ce que les cames (4') sont à pentes asymétriques et présentent une partie supérieure plane d'appui de l'extrémité inférieure des patins (4''), qui ont une forme de pointe triangulaire à bout arrondi.

6. Robinet, suivant l'une quelconque des revendications 1, 2, 4 et 5 caractérisé en ce que les cames (4') sont pourvues, à l'extrémité de la partie supérieure plane, du côte de la plus forte pente, d'un dispositif (10) d'arrêt en position des patins (4''), sous forme d'une saillie d'extrémité.

7. Robinet, suivant la revendication 1, caractérisé en ce que la membrane d'étanchéité élastique (3) est pourvue d'un fût (3'), d'une seule pièce avec ladite membrane (3) et pourvu à son extrémité libre d'un palier (3'') de liaison avec possibilité de rotation au bouton formant le piston (2).

8. Robinet, suivant l'une quelconque des revendications 1 et 2, caractérisé en ce que le bouton formant le piston (2) est pourvu, de manière connue, à la périphérie de sa partie supérieure d'un moletage (7) favorisant sa préhension et sa manoeuvre.

9. Robinet, suivant l'une quelconque des revendications 1, 3 et 4, caractérisé en ce que le corps (1) du robinet est pourvu, sous la gorge périphérique (6), d'un ergot (8) destiné à coopérer avec un trou de section correspondante d'une cape arrachable (9) reliée au bouton (2) par des picots et présentant une surface de collage d'un timbre de fiscalisation.

10. Robinet, suivant la revendication 1, caractérisé en ce que le corps du robinet s'étend de manière inclinée par rapport à la perpendiculaire à l'axe du corps de montage dans un récipient.

11. Robinet, suivant la revendication 1, caractérisé en ce que le corps (1') du robinet s'étend en prolongement du corps de montage dans la bonde d'un récipient et coaxialement à ce dernier, son piston (2') s'étendant également coaxialement au corps de montage, la membrane d'étanchéité correspondante (13) s'appuyant directement sur une portée (14) prévue sur un canal (15) de liaison entre ledit corps de montage dans la bonde et le corps (1') du robinet, en aval de l'orifice d'écoulement (16) de ce dernier.

## Claims

1. Tap for dispensing liquids, in particular food liquids, with automatic closure, consisting essentially of a body (1) for mounting in the bunghole of a receptacle and a piston (2) for releasing the liquid and acting on a resilient sealing membrane (3) fixed to the body (1), this tap being provided with a means (4) of holding the piston (2) in the open position, consisting of elements (4' and 4'') with cooperating shapes provided respectively on the body (1) of the tap and on the piston (2), characterised in that the elements (4' and 4'') forming the means (4) consist respectively of cams extending over the part of the body (1) of the tap forming the seat of the resilient sealing membrane (3) and the guidance of the piston (2) and of runners disposed at regular intervals on a part of the piston (2) extending concentrically above the said cams on the body (1).

2. Tap according to Claim 1, characterised in that the piston (2) is made in the form of a hollow operating knob fitted on the part of the body (1) of the tap forming the seat of the resilient sealing membrane (3) and the guidance of the said piston (2) and is connected, with the possibility of free rotation, to the resilient sealing membrane (3) fixed to the body (1).

3. Tap according to either one of Claims 1 and 2, characterised in that the piston (2) is also provided with a means (5) of holding by snapping onto the corresponding part of the body (1), by cooperation with a peripheral groove (6) extending under the cams forming the elements (4') of the means (4), this means (5) being in the form of an inner end shoulder.

4. Tap according to either one of Claims 1 and 2, characterised in that the runners forming the elements (4'') provided on the piston (2) are disposed on the internal cylindrical wall of the knob forming the piston (2), on the side opposite to the shoulder forming the means (5) of holding by snapping-on, their bottom end being at a distance from the said shoulder slightly greater than the height of the cams (4') as from the peripheral groove (6).

5. Tap according to any one of Claims 1, 2 and 4, characterised in that the cams (4') have asymmetric slopes and have a flat top part for supporting the bottom end of the runners (4''), which have the shape of a triangular point with a rounded end.

6. Tap according to any one of Claims 1, 2, 4 and 5, characterised in that the cams (4') are provided, at the end of the flat top part, on the side with the greatest slope, with a device (10) for stopping the runners (4'') in position, in the form of an end projection.

7. Tap according to Claim 1, characterised in that the resilient sealing membrane (3) is provided with a barrel (3'), in a single piece with the said membrane (3), and provided at its free end with a connecting bearing (3'') with the possibility of rotation on the knob forming the piston (2).

8. Tap according to either one of Claims 1 and 2, characterised in that the knob forming the piston (2) is provided, in a known fashion, at the periphery of its top part, with a knurled part (7) assisting its gripping and operation.

9. Tap according to any one of Claims 1, 3 and 4, characterised in that the body (1) of the tap is provided, below the peripheral groove (6), with a stud (8) intended to cooperate with a hole with a corresponding cross section in a tear-off cover (9) connected to the knob (2) by spikes and having a surface for the adhesion of a tax stamp.

10. Tap according to Claim 1, characterised in that the body of the tap extends so as to be inclined with respect to the perpendicular to the axis of the body for mounting in a receptacle.

11. Tap according to Claim 1, characterised in that the body (1') of the tap extends in line with the body for mounting in the bunghole of a receptacle and coaxially with the latter, its piston (2') also extending coaxially with the mounting body, the corresponding sealing membrane (13) bearing directly on a surface (14) provided on a connecting channel (15) between the said body for mounting in the bunghole and the body (1') of the tap, downstream of the flow orifice (16) of the latter.

## Patentansprüche

1. Zapfhahn für Flüssigkeiten, insbesondere flüssige Lebensmittel, mit automatischem Verschluss, im wesentlichen gebildet aus einem Montagekörper (1) im Spundloch eines Behälters und aus einem Kolben (2) zur Freisetzung der Flüssigkeit, der auf eine mit dem Körper (1) verbundene elastische Dichtungsmembran (3) wirkt, wobei der Hahn mit einem Mittel (4) versehen ist, um den Kolben (2) in Öffnungsposition zu halten, umfassend Elemente (4' und 4'') in zusammenwirkender Form, die jeweils auf dem Körper (1) des Hahns und auf dem Kolben (2) vorgesehen sind, dadurch gekennzeichnet, dass die das Mittel (4) bildenden Elemente (4' und 4'') jeweils durch Nocken gebildet sind, die sich auf dem Teil des Körpers (1) des Hahns erstrecken, der den Sitz der elastischen Dichtungsmembran (3) und die Kolbenführung (2) bildet, und durch Ansätze, die in regelmässigen Abständen auf einem Teil des Kolbens (2) angeordnet sind und sich konzentrisch über den Nocken des Körpers (1) erstrecken.

2. Zapfhahn nach Anspruch 1, dadurch gekennzeichnet, dass der Kolben (2) in Form eines hohlen Betätigungsknopfes ausgebildet ist, der auf dem Teil des Körpers (1) des Hahns aufgesetzt ist, der den Sitz der elastischen Dichtungsmembran (3) und der Führung des Kolbens (2) bildet, und mit Möglichkeit zur freien Rotation an der mit dem Körper (1) verbundenen elastischen Dichtungsmembran (3) angebracht ist.

3. Zapfhahn nach Anspruch 1 oder 2, dadurch gekennzeichnet, dass der Kolben (2) ausserdem mit einem Mittel (5) zum Halten durch Einrasten auf dem entsprechenden Teil des Körpers (1) ausgerüstet ist, durch Kooperation mit einer umlaufenden Hohlkehle (6), die sich unter den Nocken erstreckt, die die Elemente (4') des Mittels (4) bilden, wobei das Mittel (5) in Form einer Kröpfung am inneren Ende ausgebildet ist.

4. Zapfhahn nach Anspruch 1 oder 2, dadurch gekennzeichnet, dass die Ansätze, die die auf dem Kolben (2) vorgesehenen Elemente (4'') bilden, auf der inneren Zylinderwand des den Koblen (2) bildenden Knopfes angeordnet sind, auf der Seite gegenüber der Kröpfung, die das Mittel (5) zum Halten durch Einrasten bildet, wobei ihr unteres Ende in einem Abstand zur Kröpfung ist, der etwas grösser ist als die Höhe der Nocken (4') von der umlaufenden Hohlkehle (6).

5. Zapfhahn nach einem der Ansprüche 1, 2 und 4, dadurch gekennzeichnet, dass die Nocken (4') asymmetrische Neigungen aufweisen und einen oberen ebenen Teil zum Abstützen des unteren Endes der Ansätze (4''), die eine dreieckige Spitze mit abgerundetem Ende aufweisen.

6. Zapfhahn nach einem der Ansprüche 1, 2, 4 und 5, dadurch gekennzeichnet, dass die Nocken (4') am Ende des oberen ebenen Teils an der am stärksten geneigten Seite mit einer Stoppvorrichtung (10) in Position der Ansätze (4'') in Form eines Endvorsprungs versehen sind.

7. Zapfhahn nach Anspruch 1, dadurch gekennzeichnet, dass die elastische Dichtungsmembran (3) mit einem Schaft (3') versehen ist, in einem Stück mit der Membran (3) und an seinem freien Ende versehen mit einem Lager (3'') zur Verbindung mit Möglichkeit zur Rotation am Knopf, der den Kolben (2) bildet.

8. Zapfhahn nach Anspruch 1 oder 2, dadurch gekennzeichnet, dass der den Kolben (2) bildende Knopf, auf bekannte Weise, aussen an seinem oberen Teil mit einer Riffelung (7) versehen ist, die sein Ergreifen und seine Betätigung erleichtern.

9. Zapfhahn nach einem der Ansprüche 1, 3 und 4, dadurch gekennzeichnet, dass der Körper (1) des Hahns unter der umlaufenden Hohlkehle (6) mit einem Dorn (8) versehen ist, der zur Kooperation mit einem Loch mit entsprechendem Querschnitt einer abnehmbaren Hülle (9) bestimmt ist, die mit dem Knopf (2) durch Verbindungselemente verbunden ist und eine Fläche zum Aufkleben einer Steuermarke bildet.

10. Zapfhahn nach Anspruch 1, dadurch gekennzeichnet, dass der Körper des Hahns sich in Bezug auf die Senkrechte zur Achse des Montagekörpers in einem Behälter geneigt erstreckt.

11. Zapfhahn nach Anspruch 1, dadurch gekennzeichnet, dass der Körper (1') des Hahns sich in Verlängerung des Montagekörpers in das Spundloch eines Behälters und koaxial zu diesem erstreckt, wobei sich sein Kolben (2') gleichermassen koaxial zum Montagekörper erstreckt, wobei sich die entsprechende Dichtungsmembran (13) direkt auf einer Lauffläche (14) abstützt, die auf einem Verbindungskanal (15) zwischen dem Montagekörper im Spundloch und dem Körper (1') des Hahns, unterhalb der Auslauföffnung (16) des Hahns vorgesehen ist.
